# EUROPÄISCHE PATENTSCHRIFT

(11) **EP 2 888 771 B1**
(45) Veröffentlichungstag und Bekanntmachung des Hinweises auf die Patenterteilung: **08.11.2017**
(21) Anmeldenummer: 13753585.2
(22) Anmeldetag: 27.08.2013
(51) Int. Cl.: H01M 2/16, B32B 5/02, B32B 15/085, B32B 27/12, B32B 3/26, D03D 1/00, D03D 9/00, D03D 11/02, D03D 15/00, D03D 19/00, H01M 10/052

(54) **MEHRLAGIGER SEPARATOR FÜR EINE ELEKTROCHEMISCHE ZELLE**
MULTI-LAYERED SEPARATOR FOR AN ELECTROCHEMICAL CELL
SÉPARATEUR MULTICOUCHE POUR UNE CELLULE ÉLECTROCHIMIQUE

(30) Priorität: 27.08.2012 DE 102012107848
(43) Veröffentlichungstag der Anmeldung: 01.07.2015
(73) Patentinhaber: Karlsruher Institut für Technologie, 76131 Karlsruhe (DE)
(72) Erfinder: BINDER, Joachim, 76227 Karlsruhe (DE); GLATTHAAR, Sven, 76137 Karlsruhe (DE)
(86) Internationale Anmeldenummer: PCT/EP2013/002579
(87) Internationale Veröffentlichungsnummer: WO 2014/032796

(56) Entgegenhaltungen:
- JP-A- H10 270 005
- JP-A- H10 302 748
- JP-A- 2006 269 358
- US-A1- 2004 115 523
- US-A1- 2012 231 321

## Beschreibung

Gegenstand der vorliegenden Erfindung ist ein mehrlagiger Separator zur Herstellung einer elektrochemischen Zelle, bevorzugt einer Lithium-Metall-Zelle (LMB) oder auch Lithium-Metall-Polymer-Zelle (LMPB) oder Lithium-Polymer-Zelle (LPB) oder auch Lithium-Ionen-Zelle (LIB).

Heutige LMPB / LMB / LPB / LIB umfassen im Wesentlichen mindestens
- zwei Elektroden als mischleitende Phasen, wobei an der Anode die über den Elektrolyt ausgetauschten Metallionen und die über den äußeren Stromkreis geflossenen Elektronen separiert werden und an der Kathode rekombinieren,
- einen Separator, der die Elektroden mechanisch trennt und einen elektrischen Kurzschluss zwischen diesen verhindert,
- einen Elektrolyten als ionenleitende Phase, der die Metallionen-Migration ermöglicht,
- mindestens einen Anodenableiter und mindestens einen Kathodenableiter als elektronisch leitende Phasen, die die Zelle mit dem äußeren Stromkreis verbinden, um die Elektronen über den äußeren Stromkreis von der Anode zur Kathode zu transportieren.

Eingesetzt werden diese Zellen bevorzugt in Sekundärbatterien (Akkumulatoren), die reversibel geladen und entladen werden können und beispielsweise in elektrischen Kleingeräten, in Elektrofahrzeugen oder stationär als Zwischenspeicher elektrischer Energie im Stromnetz Verwendung finden. Des Weiteren kann der mehrlagige Separator in einem Kondensator im Besonderen in Schicht- oder Doppelschichtkondensatoren verwendet werden.

Bei einer Verwendung der elektrochemischen Zelle zwecks einer Energieentnahme sind die Anode und die Kathode über einen äußeren Stromkreislauf, elektrisch miteinander verbunden. Aufgrund des elektrischen Potentialunterschieds zwischen den Elektroden fließt Strom. Die beiden Elektroden unterscheiden sich durch ihr jeweiliges Elektrodenpotential, das häufig auch als Redoxpotential bezeichnet wird. Das Redoxpotential ist ein Maß dafür, wie bereitwillig die jeweilige Elektrode die Ionen (in den Elektrolyten) abgeben können. Je bereitwilliger die Elektrode die jeweiligen Ionen in den Elektolyten abgibt, desto negativer ist ihr Redoxpotential.

Eine elektrochemische Zelle beinhaltet mindestens zwei Elektroden mit unterschiedlichen Elektrodenpotentialen bezüglich einer Ionisierung eines chemischen Elements, wobei die Elektrode mit dem kleineren Potential als Anode (negative Elektrode) und die Elektrode mit dem größeren Potential als Kathode (positive Elektrode) bezeichnet wird.

Unter elektrochemisch aktives Material wird ein Material verstanden, das in Kontakt mit einem Elektrolyten in Anwesenheit einer Gegenelektrode Energie in Form von Ladungsträgern auf elektrochemischem Wege speichern und in Form von elektrischem Strom wieder abgeben kann. In einer bevorzugten Ausgestaltung werden hierzu folgende Materialien eingesetzt:

Auf der Kathodenseite: Verbindungen von Lithium mit anorganischen metallischen Elementen, bevorzugt Aluminium, Kobalt, Nickel, Mangan, Eisen, und anorganischen nichtmetallischen Elementen, bevorzugt Silizium, Phosphor, Fluor oder Sauerstoff oder einer Kombination der Aufzählung. In einer besonderen Ausgestaltung ist das elektrochemisch aktive Material zusätzlich mit einer Struktur bzw. offenporigen Struktur zur Einführung eines festen oder flüssigen Elektrolyten versehen.

Offenporig bedeutet, dass die Struktur, ausgehend von jedem ihrer Strukturelemente, theoretisch vollständig mit dem Elektrolyten gefüllt werden kann. Diese besondere Ausgestaltung ist dann von wesentlichem Vorteil, wenn das elektrochemisch aktives Material selbst nur eine geringe Ionenleitfähigkeit, insbesondere unterhalb von 0,01 mS/cm, aufweist.

Dreidimensional bezeichnet die geometrische Form der perkolierenden Struktur, die sich nach allen drei Raumrichtungen in das elektrochemisch aktive Material erstreckt.

Als perkolierend werden dreidimensionale Strukturen in einer Matrix angesehen, deren strukturbildende Elemente insbesondere in einer ausreichend hohen Konzentration derart in der Matrix vorliegen, dass sie durchgängige stromtragende Pfade ausbilden.

Die kritische Konzentration, die auch als Perkolationsschwelle bezeichnet wird, ab der die elektrische Leitend typischerweise über viele Größenordnungen stark nichtlinear mit der Konzentration zu steigen beginnt, ist insbesondere abhängig vom Aspektverhältnis der strukturbildenden Elemente und deren spezifischer Oberfläche.

Unter Aspektverhältnis wird verstanden
- bei quasi-eindimensionalen Strukturen, d.h. Strukturen, in denen eine Dimension, die als Höhe h bezeichnet wird, größer ist als die beiden anderen Dimensionen Länge ℓ und Breite b, deren Produkt A = ℓ·b auch als Querschnitt bezeichnet wird, das Verhältnis von h / √A und
- bei quasi-zweidimensionalen Strukturen, d.h. Strukturen, in denen eine Dimension, die als Höhe h bezeichnet wird, kleiner ist als die beiden anderen Dimensionen Länge ℓ und Breite b, deren Produkt A = ℓ·b auch als Querschnitt bezeichnet wird, das Verhältnis von √A / h.

Allgemein kann der mehrlagige Separator in allen elektrochemischen Zellen eingesetzt werden, welche mindestens eine Anode umfassen. Die Anode besteht beispielsweise, aus Graphit (Soft-Carbon und/oder Hard-Carbon und/oder Carbon -Nanostrukturen und/oder Carbon nanotubes und/oder Carbon nanoballs und/oder Carbon fiber und/oder Graphit insbesondere Graphit-Platten und/oder Graphit-Nanopartikel) und / oder eine aus einem Alkalimetall und / oder einen Erdalkalimetalle und / oder einer Kombination von Alkalimetallen mit Erdalkalimetalle, aus Silizium und/oder aus Germanium und/oder Mangan und/oder Zinn und/oder Antimon und/oder Blei-Antimon-Legierungen und/oder Zinn-Antimon-Legierungen und/oder Zinn-Antimon-Kupferlegierungen und/oder Zinn-Antimon-Kupfer-Bleilegierungen und/oder Aluminium-Antimon und/oder Gallium-Antimon und/oder Indium-Antimon, aus einer Legierung mit Kupfer und/oder Aluminium und/oder Magnesium und/oder Mangan und/oder Silizium und/oder Eisen und/oder Titan und/oder Beryllium und/oder Lithium und/oder Chrom und/oder Zink und/oder Zirconium und/oder Molybdän, aus Lithium Titanat (Li₄Ti₅O₁₂ und / oder Li₇Ti₅O₁₂) und/oder Zn₂Ti₃O₈ und / oder Si/TiSi₂ und/oder TiP₂O₇ und/oder Li_{2.6}Co_{0.4}N und/oder Mn₃O₄ und/oder Terephthalate (Na₂C₈H₄O₄).

Des Weiteren kann es sich bei der elektrochemischen Zelle beispielsweise auch um eine Alkalimetall-Schwefel-Zelle oder Alkalimetall - Sauerstoffzelle oder Alkalimetall - Luft-Zelle oder Zink-SauerstoffZelle oder Zink-Luft-Zelle handeln.

Die Einzellagen des mehrlagigen Separators können beschichtet sein. Die Beschichtung der Einzellage kann beispielsweise ganz oder teilweise keramisch nichtleitfähig sein, beispielsweise aus Al₂O₃. BaTiO₃ und/oder SiO₂ bestehen und/oder keramisch leitfähig sein, beispielsweise aus TiN bestehen, und/oder metallisch leitfähig sein, beispielsweise aus Ti, AL, Cu und/oder Ni bestehen..

Der mehrlagige Separator hat neben anderen die Aufgabe, den Elektrolyten in sich aufzunehmen und auf diese Weise den Ionenaustausch zwischen der Anode und der Kathode durch den Separator hindurch zu ermöglichen.

Um einen möglichst kompakten Aufbau der elektrochemischen Zelle und eine besonders hohe Energiedichte der elektrochemischen Zelle zu erreichen, kann der mehrlagige Separator in einem Berührungskontakt mit den Anoden bzw. Kathoden stehen oder ist zumindest in einer unmittelbaren Umgebung angeordnet oder ist ein Teil der Anoden bzw. Kathoden oder eines Verbunds aus Anode bzw. Kathode. Der mehrlagigen Separator kann in Form einer dreidimensionalen geformten Struktur eines flachen, mäanderförmigen und / oder gefalteten Verbundes kombiniert vorliegen.

Für die Sicherheit und Haltbarkeit der elektrochemischen Zelle ist eine mechanische Stabilität, thermische Stabilität (Stabilität bei hohen Temperaturen) und elektrochemische Stabilität des Separators entscheidend.

Wird der Separator beispielsweise durch eine mechanische Krafteinwirkung beschädigt, insbesondere durch ein Durchdrücken oder Reißen, kann es zu einem elektrischen Kurzschluss führen. Dies hat in der Regel eine Zerstörung der Zelle zur Folge und geht meistens mit einer sehr starken Wärmeentwicklung einher, die zu einer Brandentwicklung führen kann.

Derartige Kurzschlüsse können auch durch eine Verformung des Separators infolge hoher Temperaturen entstehen, oder Dendriten durchstechen den Separator, welche beispielsweise bei Kristallisationsprozessen innerhalb der Zelle entstehen können.

Neben der globalen, d. h. die Gesamtzelle betreffenden flächendeckenden Erwärmung der Zelle durch unsachgemäßen Einsatz oder Betrieb, auch durch allgemeine Alterungserscheinungen können jedoch auch anomale lokale Störungen des Zellbetriebs erfolgen.

Darunter fällt insbesondere das Auftreten eines "Internal short circuits" abgekürzt "ISC" dies bedeutet die Ausbildung einer unerwünschten Verbindung zwischen Anode und Kathode aus einem elektronisch gut leitenden Material. Dadurch werden lokal auftretende anomale lokale Überhitzungen generiert. Derartige ISC werden bei einer LIB bzw. LMB z.B. durch Dendritenbildung von der Anode in Richtung Kathode, hervorgerufen z. B. bei Überladen oder fehlerhaftem Laden bei niedrigen Temperaturen.

Die Ursachen des Dendritenwachstums sind im Wesentlichen bekannt. Der nadelähnliche Kristall nimmt zu, wenn beim Laden große Konzentrationsgradienten für Ionen entstehen, da der Dendrit zu dem konzentrierteren Teil des Elektrolyts hin und von der verarmten Schicht an der Anodenoberfläche aufwächst.

Aufgrund von Inhomogenitäten in der Abscheidung der Ionen während der Ladephase verstärkt sich die Dendritenbildung, weil sie als leitende Metallspitzen zur lokalen Feldüberhöhung führen und den Weg der Ionen durch den Elektrolyt verkürzen. Zwar werden diese Dendriten bei jedem Entladen teilweise wieder abgebaut und bewirken auch eine Verringerung des Innenwiderstandes in den ersten Lade-Entlade-Zyklen, bilden aber die Grundlage für neues Dendritenwachstum bei jedem neuen Ladevorgang. Nach einigen Zyklen mit dieser metastabilen Dendritenbildung, die den Ladestrom gegenüber dem Entladestrom erhöht und somit den Wirkungsgrad der Batterie erniedrigt, kommt es in der Regel zu einem Totalausfall der Zelle, meist dadurch, dass die Zelle aufgrund des Kurzschlussstrom nicht mehr geladen werden kann.

Das starke Dendirtenwachstum bei der Verwendung von Lithium-Anoden schränkt die Wiederaufladbarkeit von Lithium-Metall-Batterien ein (Nazri, G.-A., Pistoia, G; Lithium Batteries, Kap. 10; 2009)

Eine vorgeschlagene Gegenmaßnahme wie sie in der Patentschrift DD 95412 A5 veröffentlicht, ist eine hohe Elektrolytströmung in der elektrochemischen Zelle selbst aufzubauen, welche die Konzentrationsunterschiede im Elektrolyt ausgleicht und in gewissen Fällen auch mechanisch dazu beitragen kann, gebildete Dendrite zu brechen. Genannt wird hier auch, während des Ladens die Batterie in Vibration zu versetzen, um gebildete Dendrite abbrechen zu lassen. Beide vorgeschlagene Maßnahmen erhöhen jedoch die Komplexität des Systems und deren Kosten.
die Batterie in Vibration zu versetzen, um gebildete Dendrite abbrechen zu lassen. Beide vorgeschlagene Maßnahmen erhöhen jedoch die Komplexität des Systems und deren Kosten.

Aus der Literatur sind zwei- oder mehrlagige Separatoren aus porösen Schichten bekannt. Die porösen Schichten nehmen den Elektrolyten auf und sind durchgängig für Lithium-Ionen. Gleichzeitig wird durch den Separator verhindert, dass sich ein direkter, leitfähiger Pfad zwischen Kathode und Anode ausbildet.

Beispielsweise wird in US 2012/0231321 A1 ein zweilagiger Separator beschrieben, der direkt auf die Oberfläche der Anode einer elektrochemischen Zelle aufgebracht wird. Dadurch entsteht ein Verbund aus Elektrode und Separator. Der Separator ist aus einer Schicht aus nicht-leitenden Partikeln, z.B. aus Keramik, und einer Schicht aus mikroporösem Polymer aufgebaut. Der einheitliche Verbund aus Anode und Separator bewirkt eine erhöhte mechanische und thermische Widerstandsfähigkeit des Separators im Vergleich zu herkömmlichen Separatoren.

WO 02/065561/A1 bzw. US 2004/0115523 A1 wird eine nicht-wässrige elektrochemische Zelle vorgeschlagen, die einen Separator benutzt, der aus einer Mehrzahl von laminierten mikroporösen Schichten aus Polyolefin aufgebaut ist. Diese Schichten bestehen aus porösen Polyolefin-Filmen und sind zu einem Elektrodenkörper aufgewickelt. Dadurch wird eine Temperaturkontrolle der elektrochemischen Zelle möglich und die allgemeine Zuverlässigkeit des Betriebs verbessert. Eine ähnliche Zelle ist in JP H10 302748 beschrieben.

Darüber hinaus offenbart JP H10 270005 A eine elektrochemische Zelle mit einem mehrlagigen Separator, der aus einer Polypropylen- oder Polyethylen-Mittelschicht besteht. Auf diese Mittelschicht ist entweder ein Metall abgeschieden oder eine Paste aus leitfähigen Polymer aufgetragen. Da beide Verfahren zumindest teilweise in den porösen Separator eindringen, kann zumindest ein Teil der Randschicht als aus einem leitfähigen und einem nichtleitenden Material bestehend angesehen werden.

Da Dokument JP 2006 269358 A offenbart einen zweischichtigen porösen Separator, bei dem die der Kathode zugewandte Seite PE mit Aluminapartikeln und eine Porosität von 35% aufweist während die Anodenseite 30% Graphitpartikel enthält und damit eine elektrische Leitfähigkeit aufweist. Die Porosität der Anodenschicht beträgt 36% und ist damit höher als die der Kathodenseite. Die Partikel werden mittels eines Knetvorgangs in die beiden Schichten eingearbeitet.

Im Zuge zunehmender Sicherheitsanforderungen durch Anwendungen in der Elektromobilität sind mit anorganischen Partikeln beschichtete oder infiltrierte Separatoren sowohl auf Membran- als auch Polymervliesbasis (DE 10208277 A1 und DE 10238944 A1) vorgeschlagen worden.

Als Partikel werden dabei zum Beispiel kristalline oxidische Materialien einfacher Zusammensetzung wie Al₂O₃, SiO₂, BaTiO₃ oder ähnliche genannt.

Die Integration von anorganischen Partikeln erhöht die thermische Stabilität der Komponente im Falle einer Erhitzung der Zelle und verzögert oder verhindert sogar deren elektrischen Kurzschluss.

Auch der Einsatz von "Glas" im Separatorumfeld wird in nachfolgenden Schriften beschrieben. Dabei ist das Glas entweder als Faser im Träger direkt eingebracht (DE 10142622 A1) oder aber als Pulverpartikel ein möglicher Bestandteil einer Beschichtung oder Imprägnierung (DE 19850826 A1).

Spezifischere Angaben zur Chemie von Glas in einen Separatorverbund macht Teijin in der japanischen Offenlegungsschrift JP 2005011614 A.

Die Schrift beschreibt die Verwendung von Glas z. B. in Pulverform ohne dass jedoch das Pulver abgesehen von der Korngrösse näher spezifiziert ist.

Neben der Korngröße haben insbesondere spezifische Oberflächen, Agglomerationsgrade und weitere Faktoren einen Einfluss auf die Haftung bzw. chemische Wechselwirkung.

Ein Nachteil der bisherigen Ansätze besteht unter anderem in den zunehmenden Kosten durch die Beschichtung der ohnehin recht teuren Separatoren.

Der anorganische, vorzugsweise multifunktionelle Bestandteil kann im Wesentlichen oxidische, temperaturstabile, schlecht wärmeleitende Partikel aus dem Werkstoff Glas oder einem anderem glasbasierten Material, wie zum Beispiel Glaskeramik, phasenentmischte oder Multiphasen-Glaskomposite umfassen oder aus diesen bestehen.

Als Glas wird im Sinne dieser Beschreibung ein strukturell zumindest in Teilbereichen amorphes, vorzugsweise anorganisches Material, verstanden, welches aus einem Schmelzprozess und nachfolgendem raschen Abkühlen oder aus einem Sol-Gel-Verfahren resultiert.

Als Glaskeramik im Sinne dieser Anmeldung gilt ein Material, das durch Schmelzen erhalten wurde und durch einen nachgeschalteten thermischen Prozess teilkristallin wurde bzw. bestimmte Kristalle in einer glasigen Matrix enthält. Auch die Glaskeramik kann aufgemahlen werden. Die erhöhen lässt. So wird etwa in EP 1942000 A1 eine Beimischung von anorganischen Füllstoffen, beispielsweise gegeben durch ein Magnesiumoxid, in eine auf Kunststoff, etwa auf Polypropylen, basierende Schicht des Separators beschrieben. Die elektrochemische Stabilität des Separators verhindert, dass der Separator selbst chemische Umwandlungsprozesse durchläuft wie beispielsweise eine Oxidation oder eine Reduktion von in dem Separator enthaltener Anteile. Insbesondere in elektrochemischen Zellen mit Elektroden, welche besonders hohe oder besonders niedrige Redoxpotentiale aufweisen, besteht die Gefahr der Oxidation oder Reduktion von Bestandteilen in dem Separator.

Die Gewährleistung einer erhöhten Sicherheit wie beispielsweise der Widerstand bei erhöhter äußeren Einwirkung, Vermeidung eines Kollaps der Separatorfunktion bei unkontrollierter Temperaturerhöhung der Zelle, wird anwenderseitig zwar erkannt, eine weitere aktive Funktion von Partikeln neben der einfachen Abstandshalterung, insbesondere auch im lokalen Schadensfall, ist jedoch erwünscht, um die Zelleneigenschaften weiter zu verbessern.

In der DE 10101299 A1 sind auch ionenleitende Keramikpartikel offenbart. Das Vorhandensein eines sehr temperaturstabilen kristallinen Materials, beispielsweise im Bereich des Separators, ist im Falle eines bereits eingetretenen, Gesamtzellen umfassenden "Thermal Runaways" wie bei einer homogenen Temperaturerhöhung im Zuge einer Überladung bzw. durch Betrieb bei zu hohen Temperaturen, prinzipiell hilfreich.

Hier sind Polyolefin-Separatoren sowie (glass-) faserbasierte Filtermembranen und Al₂O₃ / SiO₂-beschichtete PET-Netze bekannt, wobei die Präsenz von z. B. Al₂O₃ Partikeln bei Wegschmelzen oder Abscheren des Polymerseparators infolge erhöhter globaler Temperaturen die Abstandshalterung zwischen den beiden Elektroden weiterhin gewährleistet. In allen bekannten Fällen kann jedoch ein Dendrit durch die Poren des Separators wachsen. Die Zelle ist in diesem Falle jedoch in der Regel nicht mehr nutzbar.

In der DE 102009055944 A1 wird vorgeschlagen, die mechanische Stabilität eines Separators durch Aufbringen des Musters aus den Erhebungen und/oder Vertiefungen zu erhöhen. Im Vergleich zu einem Separator ohne dieses Muster hat der Separator eine größere Steifigkeit, wodurch sich, seine Herstellbarkeit sowie Verarbeitbarkeit in einer elektrochemischen Zelle vereinfacht. Nur durch das alleinige Aufbringen eines Musters kann eine absehbare Bildung von Dendriten nicht beeinflussen oder gar vermeiden.

Aus der DE 2854042 A1 ist eine Separator für alkalische sekundäre Zinkzellen und elektrochemische Systeme bekannt, bei denen ein Durchdringen von Hydroxylionen gewünscht wird und ein Durchdringen von Zink-Ionen gehemmt werden soll. Hier wird ein inerter poröser Träger beschrieben, auf dem eine Schicht aufgebracht worden ist, welche ein polymeres Bindemittel und ein Carbonat oder Hydroxycarbonat von Nickel, Lapthan, Magnesium oder Calcium oder einem Gemisch davon Aus der DE 2854042 A1 ist eine Separator für alkalische sekundäre Zinkzellen und elektrochemische Systeme bekannt, bei denen ein Durchdringen von Hydroxylionen gewünscht wird und ein Durchdringen von Zink-Ionen gehemmt werden soll. Hier wird ein inerter poröser Träger beschrieben, auf dem eine Schicht aufgebracht worden ist, welche ein polymeres Bindemittel und ein Carbonat oder Hydroxycarbonat von Nickel, Lapthan, Magnesium oder Calcium oder einem Gemisch davon enthält, oder eine selbsttragende Struktur eines solchen polymeren Bindemittels und Carbonats oder Hydroxycarbonats umfasst.

Ein anderer Weg zur Verhinderung von Kurzschlüssen in Folge von Dendritenwachstum ist der Einsatz eines höher viskosen Elektrolyten. Hier ist bekannt, gelierte oder feste Elektrolyte zu verwenden, beispielsweise LiPF₆ in Polyvinylidenfluorid (PVDF) und Ethylencarbonat als Weichmacher. Jedoch ist deren Leitfähigkeit relativ gering und erhöht somit den Innenwiderstand der Zelle.

Es ist daher die Aufgabe der vorliegenden Erfindung, einen mehrlagigen Separator für eine elektrochemische Zelle vorzuschlagen, welcher die genannten Probleme löst oder zumindest abmildert. Ein solcher mehrlagiger Separator soll mechanisch, elektrochemisch wie auch thermisch besonders stabil sein. Außerdem ist eine elektrochemische Zelle mit einem solchen Separator vorzuschlagen, welche sich durch eine besonders lange Haltbarkeit, möglichst große Sicherheit und leichte Herstellbarkeit verbunden mit geringen Kosten und guter Umweltverträglichkeit auszeichnet.

Es gilt weiterhin, den Widerspruch eines geringen Batterie-Innenwiderstandes für hohe Leistungsdichten und einer hohen Energiedichte bei gleichzeitiger Verhinderung der Kurzschlussbildung durch Dendritenwachstum zu lösen.

Diese Aufgabe wird erfindungsgemäß durch einen mehrlagigen Separator mit den Merkmalen des Hauptanspruchs und durch eine Verwendung eines mehrlagigen Separators für eine elektrochemische Zelle mit den Merkmalen des Patentanspruchs 13 gelöst. Spezielle Ausführungsformen und Weiterentwicklungen sind Gegenstände der Unteransprüche.

Demnach umfasst ein erfindungsgemäßer mehrlagiger Separator für eine elektrochemische Zelle mindestens zwei aufeinander liegende Einzellagen
wobei mindestens eine Einzellage mit einer Struktur mit einer Vielzahl von zusammenhängenden offen Poren zur Aufnahme eines Elektrolyts durchzogen ist. Optional kann ein Teil einer

Erste Wirkungsweise:
An der Elektrode, an der das Metall aufwachsen soll, befinden sich Durchtrittsöffnungen, die zum Elektrolyt hin offen sind und aus Wänden bestehen, die die über den äußeren Stromkreis fließenden Ladungsträger nicht leiten. Das heißt, dass die Durchtrittsöffnungen von der Elektrode, an der das Metall aufwachsen soll, elektronisch isoliert sind.

Die Durchtrittsöffnungen sind vom Volumen so ausgelegt, dass sie mindestens die nach der Kapazität der elektrochemischen Zelle maximal mögliche Abscheidemenge an Metallionen aufnehmen können. Da Metallionen nur dort abgeschieden werden können, wo sie mit den über den äußeren Stromkreis fließenden Ladungsträgern zum Metallatom rekombinieren, kann die Abscheidung nicht an den Wänden der Durchtrittsöffnungen, sondern nur an der Elektrode selbst erfolgen. Die Elektrode besteht in der Regel aus einem Ableiter aus einem Ableitermaterial wie z. B. Kupfer oder Aluminium und dem Metall, was schon abgeschieden oder im Überschuss im Elektrolyt vorhanden ist.

Die Wände bzw. Stegwände der Durchtrittsöffnungen erhöhen die lokale Feldstärke in und vor der Durchtrittsöffnungen zur kompakteren Abscheidung und beschränken das laterale Einzugsgebiet eines möglichen Dendrits, was sein Größenwachstum beschränkt. Voraussetzung für ein Funktionieren dieses Prinzips ist eine lateral homogene Metallionenverteilung im Elektrolyten vor den Durchtrittsöffnungen.

Die zweite Wirkungsweise:
Ausgehend von dem Prinzip, dass ein Teilchenstrom lateral binominal verteilt wird, trifft er auf hintereinander angeordnete Barrieren bzw. Einzellagen des mehrlagigen Separators, die den Teilchenstrom jeweils teilen.

In Kombination mit den sehr kleinen Porengrößen in den Einzellagen, die der Kathode am nächsten liegen, wird eine möglichst breite Gaußverteilung erzielt. Je mehr Barrieren bzw. Einzellagen hintereinander angeordnet werden desto größer ist die Wirkung des mehrlagigen Separators betreffend der lateral möglichst homogenen Metallionenverteilung an der Elektrode, an der das Metall aufwachsen soll.

Weitere Wirkungsweisen:
Durch das Einbringen von Einzellagen aus einer Kombination aus mindestens einem elektrisch leitenden und mindestens einem elektrisch nicht leitenden Material kann insbesondere in einem Separator-Anodenverbund auf eine flächig ausgebildeten Elektrodenableiter verzichtet werden und somit Material und dementsprechend auch Kosten und Gewicht eingespart werden.

Der mehrlagige Separator besteht nun darin, Barrieren bzw. Einzellagen mit kleiner werdenden Abstandes zueinander so zu kombinieren, dass zum einen das Dendritenwachstum nicht zum Kurzschluss führt und ebenfalls das Anwachsen des Innenwiderstandes durch zu lange Wege im Elektrolyt verhindert werden.

Anwendungsbeispiele des mehrlagigen Separators sowie des Separator-Anodenverbunds stellen einen Kompromiss zwischen deterministischer Vorgabe des Transports der Metallionen durch den Elektrolyt und ihrer Abscheidung und der kostengünstigeren stochastischen Variante von Transportleitung und Abscheidung dar.

Weitere Vorteile, Merkmale und Einzelheiten der Erfindung ergeben sich aus der nachfolgenden Beschreibung, die nicht einschränkende Beispiele darstellt, und unter Bezugnahme auf die Zeichnungen bevorzugte Ausführungsbeispiele im Einzelnen beschrieben werden.

Dabei können die in den Ansprüchen und in der Beschreibung erwähnten Merkmale jeweils einzeln für sich oder in beliebiger Kombination erfindungswesentlich sein.

Im Folgenden werden spezielle Ausführungsformen der Erfindung anhand von Fig. 1 bis Fig. 15 näher beschrieben.

Es zeigen:
- Fig. 1: Schnitt durch eine elektrochemische Zelle mit einem mehrlagigen Separator mit porösen Lagen
- Fig. 2: Schnitt durch eine elektrochemische Zelle mit einem mehrlagigen Separator mit einer Lage mit Durchtrittsöffnungen
- Fig. 3: Schnitt durch eine elektrochemische Zelle mit einem mehrlagigen Separator mit eine Lage mit Stegen
- Fig. 4: Schnitt durch eine elektrochemische Zelle mit einem mehrlagigen Separator mit eine Lage mit teilweise elektrisch leitenden Stegen
- Fig. 5: Schnitt durch eine elektrochemische Zelle mit einem mehrlagigen Separator mit einer Lage aus einem Vliess und einer Lage aus Gewebe
- Fig. 6: Vergleich der zyklenzahlabhängigen spezifischen Lade- und Entladekapazitäten einer elektrochemischen Zelle mit einem mehrlagigen Separator nach Fig. 5 mit einer Zelle mit Glasfaser- Separator
- Fig. 7: Schnitt durch eine elektrochemische Zelle mit einem mehrlagigen Separator mit einer Lage aus teilweise elektrisch leitendem Gewebe
- Fig. 8: Schnitt durch eine elektrochemische Zelle mit einem mehrlagigen Separator mit eine Lage aus beschichtetem Gewebe
- Fig. 9: Schnitt durch eine elektrochemische Zelle mit einem Separator-Anoden-Verbund, wobei eine Lage Anodenmaterial enthält
- Fig. 10: Vergleich der zyklenzahlabhängigen spezifischen Lade- und Entladekapazitäten einer elektrochemischen Zelle mit einem mehrlagigen Separator nach Fig. 9 mit einer Zelle mit Polyolefin- Separator
- Fig. 11: Schnitt durch eine elektrochemische Zelle mit einem Separator-Anoden-Verbund, wobei die Lage, die Anodenmaterial enthält, ein Gewebe mit elektrisch leitenden Kettfäden ist
- Fig. 12: Schnitt durch eine zweiseitige elektrochemische Zelle mit einem Separator-Anoden-Verbund aus einem mehrlagigen Separator mit einer Lage aus einem Gewebe mit dünnen elektrisch leitenden Kettfäden und dicken elektrisch leitenden Schussfäden und einer Einzellage
- Fig. 13: Schnitt durch eine zweiseitige elektrochemische Zelle mit einem Separator-Anoden-Verbund aus einem dreilagigen Separator mit einer Lage mit elektrisch leitenden Kettfäden und elektrisch leitenden Schussfäden und einem zweilagigen Separator
- Fig. 14: Schnitt durch eine zweiseitige elektrochemische Zelle mit einem Separator-Anoden-Verbund aus einem dreilagigen Separator mit einer Lage mit elektrisch leitenden Kettfäden und elektrisch leitenden Schussfäden, die Anodenmaterial enthält, und einem zweilagigen Separator
- Fig. 15: Schnitt durch eine zweiseitige elektrochemische Zelle mit einem Separator-Anoden-Verbund aus einem mehrlagigen Separator mit einer Lage aus einem Gewebe mit dünnen elektrisch leitenden Kettfäden und dicken elektrisch leitenden Schussfäden, die Anodenmaterial enthält, und einer Einzellage

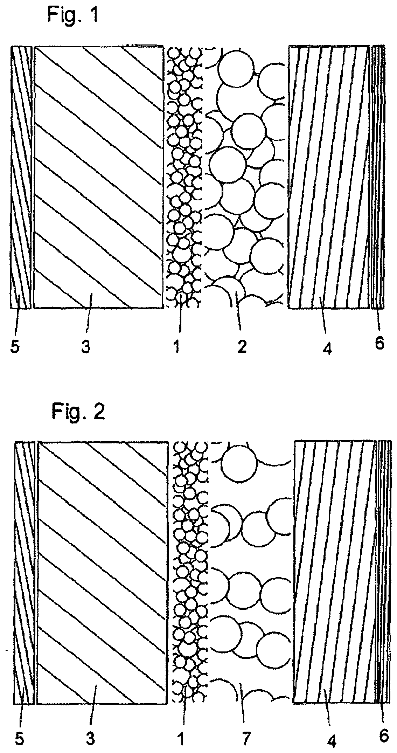

In einer bevorzugten Ausführungsform nach Fig. 1 ist der mehrlagige Separator aus mehreren flächig lose oder auch flächig verbundenen aneinander anliegenden Einzellagen (1,2) aufgebaut wobei mindestens eine Einzellage (1,2) mit einer Struktur mit einer Vielzahl von zusammenhängenden offenen Poren zur Aufnahme eines Elektrolyts durchzogen ist und die durchschnittliche Porengröße über alle Einzellagen des Separators zur Kathode (3) hin kleiner wird. Durch die Vielzahl der durchgängigen Poren pro Fläche der Einzellage (2), die der Kathode am weitesten entfernt ist, wird hier ein Volumen zur Aufnahme von Anodenmaterial bereitgestellt.

Beispielgebend werden hier Einzellagen (1,2) aus perforierten Folien, Gewebe, Netze mit Kett- und Schussfäden sowie Filze und /oder Vliese unterschiedlicher Maschen- und Porengrößen kombiniert. Eine Einzellage des Separators (1,2), kann hierbei eine Porosität zwischen 20% und 97% aufweisen.

Weiterhin Beispielhaft ist vorgesehen, dass der mehrlagige Separator aus mehreren Einzellagen (1,2) auf dem kunststoffbasierende Anteil einer Einzellage z. B. durch Polyolefin, Polyethylen (PE), Polypropylen (PP) oder eine Kombination hieraus, oder durch Polyvinylidendifluorid (PVDF), Hexafluorpropylen (HFP) oder eine Kombination (PVDF-HFP), Polytetrafluorethylen (PTFE), Polychlortrifluorethylen (PCTFE), Perfluoralkoxy-Polymere (PFA), Polyester, Polycarbonate (PC), Polyethylenterephthalat (PET), Polyvinylchlorid (PVC), Polyurethan (PU) und/oder durch ein Vlies und / Netz und oder Gewebe oder durch eine Kombination daraus gegeben ist.

Gerade auf kunststoffbasierende Einzellagen lassen sich sehr einfach durch den Einsatz der Heißlamination, insbesondere der Bandlamination, zu mehreren Lagen kombinieren. Gerade bei hohen Laminationstemperaturen im Bereich des Schmelz bzw. Erweichungspunktes hergestellt werden können, ohne einen Porenschluss zu verursachen.

Als anorganische Materialien für Einzellagen oder Beschichtungen können beispielsweise Aluminiumoxid, Siliziumdioxid, Spodumen (LiAlSi206), ein Phosphat (beispielsweise ein Lithiumphosphat), Siliziumcarbid, Siliziumnitrid, Bornitrid, Borcarbid, Titandiborid, Zirkoniumdiborid oder ein daraus bestehender Mischwerkstoff, und-/oder Lithium leitende Festkörperverbindungen und/oder Glasfasern eingesetzt werden.

Dabei werden die jeweiligen anorganischen Anteile so eingestellt, dass sich für ein vorgegebenes Aktivmaterial eine besonders hohe elektrochemische Stabilität der jeweiligen Einzellage ergibt.

Des Weiteren, ist vorgesehen, dass das Verhältnis der durchschnittlichen Porengrößen zwischen der Einzellage, die der Kathode am nächsten liegt und der die der Kathode am weitesten entfernt liegt, zwischen ½ und 1/1000000 ist. Damit liegt durchschnittliche Porengröße des mehrlagigen Separators, welche durch einen Mittelwert einer Gauß-Verteilung über alle Einzellagen gemessene Porengrößen gegeben ist, in der Regel in einem Bereich zwischen 10 nm und 1500 µm.

Dies hat zur Wirkung das die lateral Metallionenverteilung homogenisiert wird. Ausgehend von dem Prinzip, dass ein Teilchenstrom lateral binominal verteilt wird, trifft er auf hintereinander angeordnete Barrieren, die ihn jeweils zur Hälfte teilen, ist eine möglichst breite Gaußverteilung dann erzielbar, je mehr Barrieren kleiner werdenden Abstandes hintereinander angeordnet werden. Hierbei können die Einzellagen, die flächig fest miteinander verbunden sind, insbesondere durch Laminieren oder durch Beschichten einer ersten Einzellage mit einer zweiten Einzellage. die Einzellagen zwischen 5µm und 800 µm dick, bevorzugt zwischen 10 µm und 300 µm.

Eine weitere Ausführungsform zeigt Fig. 2., bei der die Einzellage (7), die der Kathode (3) am weitesten entfernt ist Durchtrittsöffnungen umfasst.
Je größer die Durchtrittsöffnungen, umso höher die Porosität dieser Lage und desto geringer der Innenwiderstand des mehrlagigen Separators.

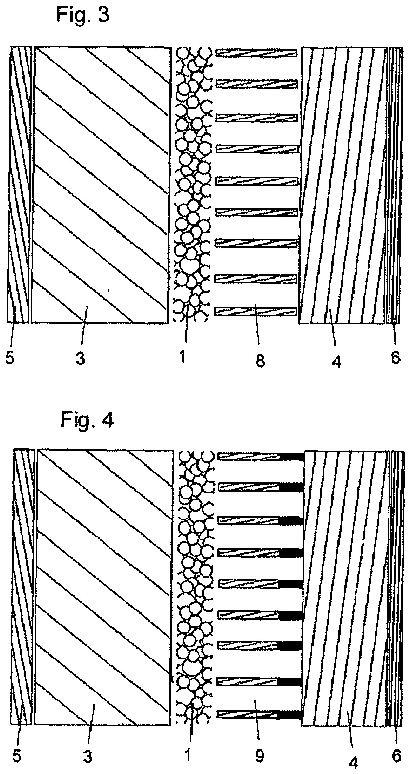

Ein besonders bevorzugtes Ausführungsbeispiel ist in Fig. 3 gezeigt. Hier besitzt die Einzellage (8), die der Kathode(3) am weitesten entfernt ist, eine Porosität nahe 100% und besteht nur noch aus dünnwandigen, nicht elektrisch leitenden Stegen bzw. Stegwänden, zwischen denen beim Laden der elektrochemischen Zelle die Volumenzunahme der Anode Platz findet. Die Stege dienen als Abstandshalter zwischen Anode und den weiteren Lagen des Separators und bilden ein bevorzugt ein Gitter. Dieses hat einen aus Dreiecken oder Quadraten oder Waben aufgebauten Grundriss, um die mechanische Stabilität dieser Lage zu erhöhen.

Fig. 4 zeigt eine Alternative, die in der Fig. 3. vorgestellte Ausführung, hierbei ist zumindest ein Anteil der Einzellage (9), die der Kathode (3) am weitesten entfernt ist, elektrisch leitend. Befinden sich die elektrisch leitenden Anteile in elektrischem Kontakt mit der Anode (4), dann ist ihr größter Massenanteil bevorzugt der Anode (4) zugewandt. Dies erhöht die Oberfläche, an der die ausgetauschten Ionen während des Ladens an der Anode (4) abgeschieden werden können und senkt zusätzlich den Innenwiderstand der elektrochemischen Zelle, was ihre Leistungsfähigkeit erhöht. Durch eine Variation des elektrisch leitenden Masseanteils lässt sich die zur Verfügung stehende Oberfläche für die Abscheidung gezielt einstellen und durch seine Verteilung das Abscheideverhalten steuern. Wächst beispielsweise ein Dendrit an einer leitfähigen Stegwand, dann ist seine Wachstumsrichtung in der Separatorebene und nicht flächennormal, trägt also zunächst nicht zur Kurzschlussbildung bei.

Weiter kann ein zusätzlicher elektrisch leitender Masseanteil in der Einzellage (1), die der Kathode (3) am nächsten liegt, von Vorteil sein, um ein lateral möglichst homogenes Einlagern der ionischen Ladungsträger in die Kathode beim Entladen vorzubereiten.

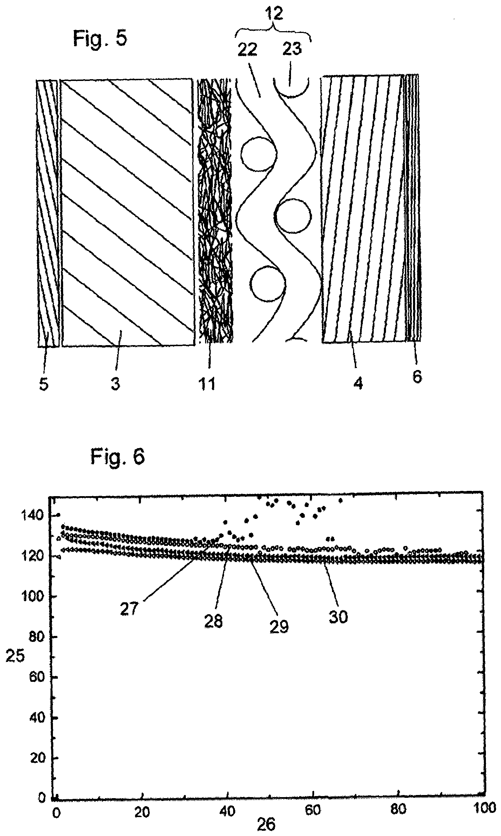

In einer weiteren in Fig. 5 dargestellten Ausführungsform ist der mehrlagige Separator aus mehreren Einzellagen (11, 12) aufgebaut wobei mindestens eine Einzellage (12) als Gewebe mit Kett- und Schussfäden und den darin enthaltenen Poren ausgeführt ist.

Der erfindungsgemäße, mehrlagige Separator aus Fig. 5 verwendet unter anderem ein PP-Netz zur Bildung von Durchtrittsöffnungen auf der Seite, die der Kathode (3) am weitesten entfernt ist, und ist ca. 490 µm dick und damit dicker als der Glasfaserseparator. Eine größere Dicke führt zu einem größeren Innenwiderstand und begründet die etwas niedrigeren Werte für die spezifische Kapazität, die allerdings über denen liegen, die mit einem Glasfaserseparator gleicher Dicke erzielt werden.

Während die Lithium-Metall-Zelle mit Glasfaserseparator nach ca. 40 Zyklen schwankende Ladekapazitäten aufweist, was auf den Bereich der metastabilen Dendritenbildung hinweist, verhält sich die Zelle mit dem erfindungsgemässen mehrlagigen Separator über 100 Zyklen stabil.

Fig. 6 zeigt einen Vergleich der zyklenzahlabhängigen spezifischen Lade- und Entladekapazitäten einer Lithium-Metall-Zelle mit einem erfindungsgemäßen mehrlagigen Separator nach Fig. 5 gegenüber einer Lithium-Metall-Zelle mit einem handelsüblichen Glasfaserseparator mit ca. 260 µm Dicke. Die Strombelastung während der Messung entsprach einem zweitstündigen Laden und Entladen.

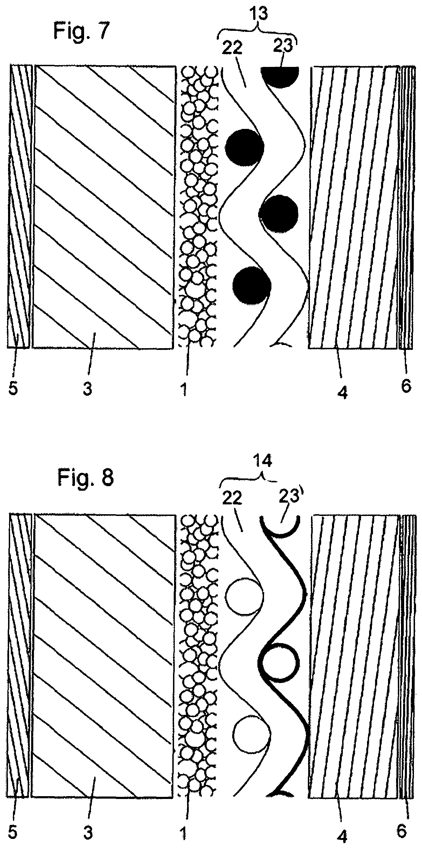

In einer weiteren Ausführung wie in Fig. 7 dargestellt, ist der mehrlagige Separator aus mehreren Einzellagen (1, 13) aufgebaut wobei mindestens eine Einzellage (13) als Gewebe mit Kett- und Schussfäden. Beispielhaft hierbei kann die Einzellage (13) auch als ein Kett- und Schussfadensystem wie der Schussdouble (zwei Schussfadensysteme, ein Kettfadensystem) oder Kettdouble (ein Schussfadensystem, zwei Kettfadensysteme) ausgeführt werden. Hierbei wird beispielhaft ausgeführt, dass der doppelt ausgeführte Schuß- oder Kettfaden einen elektrisch leitenden organischen und einem elektrisch nichtleitenden anorganische Material.

Vorzugsweise liegt der Material-Massenanteil des elektronisch nichtleitenden organischen Materials einem Bereich zwischen 40% und 85%.

Nicht dargestellt, aber beispielhafte weitere Variationen für den Schussdouble können hier aus einem elektrisch nichtleitenden organischen und einem elektrisch leitenden anorganische Material und / oder aus einem elektrisch nichtleitenden anorganischen und einem elektrisch leitenden anorganische Material und / oder aus einem elektrisch nichtleitenden organischen und einem elektrisch leitenden organische Material ausgeführt werden.

In der in Fig. 8 dargestellten Ausführungsform ist die Einzellage (14), die zur Kathode (3) am weitester entfernt ist, ein Gewebe wie in Fig. 5 aus Kett- und Schussfäden besteht und mit einem elektrisch leitenden Material auf der Seite, die zur Anode (3) zeigt, beschichtet ist.

Wie in dem in Fig. 4 dargestellten Ausführungsbeispiel wird dadurch eine Verringerung des inneren Wiederstands durch eine vergrößerte Oberfläche bei der Metallabscheidung an der Anode (3) während des Ladens der Lithium-Metall-Zelle erzielt.

Weiter ist es aus Gründen der mechanischen Stabilität sinnvoll die Einzellage (14), aus einem Gewebe aus metallischen Kett- und Schussfäden einzusetzen, wobei welches aber teilweise elektrisch nichtleitend beschichtet ist.

Der Einsatz vom mehreren elektrisch leitend und / oder elektrisch nichtleidenden Zwischenschichten verbessert die Haftung zwischen dem Substrat und Schicht. Weitere Aufgaben einer Beschichtung bestehen in der Erhöhung der elektrochemischen und thermischen Stabilität und besseren Benetzbarkeit des mehrlagigen Separators.

In einer weiteren, hier nicht dargestellten Ausführung ist der mehrlagige Separator aus mehreren Einzellagen aufgebaut wobei mindestens eine Einzellage als Doppelgewebe ausgeführt ist. Beispielhaft hierfür ist das diese aus zwei Geweben die miteinander gewoben werden und dabei auf verschiedene Art miteinander verbunden sind. Die Verbindungen erfolgt zum Beispiel durch die Verbindung von Schuss des unteren und Kette des oberen Gewebes oder durch die Verbindung von Kette des unteren und Schuss des oberen Gewebes oder als Bindeschuß oder Bindekette und / oder ein weiteres Fadensystem verbindet die beiden Gewebe als Schuss oder Kette oder unteres und oberes Gewebe wechseln am Rand des Materials miteinander ab. In der Mitte des Doppelgewebes entsteht somit ein Hohlraum, daher auch die Bezeichnung Hohlgewebe.

Alternativ ist der mehrlagige Separator, hier ebenfalls nicht näher dargestellt, aus mehreren Einzellagen aufgebaut, wobei mindestens eine Einzellage als Gewebe mit mehreren Kett- oder Schussfadensystemen aufgebaut ist wobei sogenannte Dreherlitzen eingesetzt werden, bei denen die Kettfäden sich z. B. paarweise auch seitlich umschlingen. Diese Ausführung bildet offene, netzähnliche Flächen in die auch vorteilhafterweise Anoden bzw. Kathodenmaterial eingepresst werden kann.

In einer besonderen Ausgestaltung des Separators ist das Gewebe oder Gewebesystem zur mechanischen Verfestigung wie auch zur Verkleinerung der Poren zusätzlich gewalzt bzw. gepresst. Es kann auch Anodenmaterial in die Poren eingewalzt oder eingepresst sein womit die Anode durch mindestens eine Einzellage aus einer Kombination aus mindestens einem elektrisch leitenden und mindestens einem elektrisch nicht leitenden Material nachgebildet wird und somit Teil eines Separatoren-Anoden-Verbundes ist, diese Konstellation umfasst auch einen Ableiter im Separatoren-Anoden-Verbund der wiederum aus einer Einzellage aufgebaut seien kann.

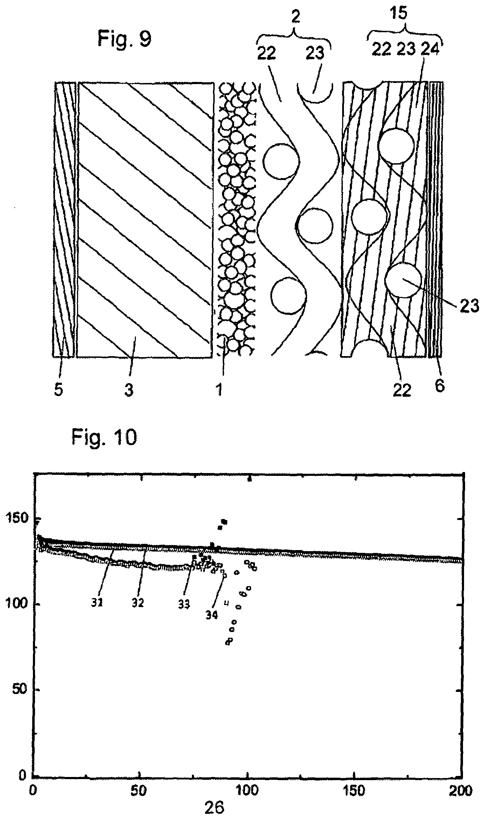

Fig. 9. zeigt einen Separator-Anodenverbund aus drei Einzellagen (1,2,15), wobei die Einzellage (15), die der Kathode (3) am weitesten entfernt ist, Anodenmaterial enthält. Das diese Ausgestaltung besonders vorteilhaft ist, zeigt das in Fig. 10 dargestellte Messergebnis.

Fig. 10 zeigt den Vergleich der zyklenzahlabhängigen spezifischen Lade- und Entladekapazitäten einer Lithium-Metall-Zelle mit einem Polyolefin-Separator mit ca. 25 µm Dicke und einer Lithium-Metall-Zelle mit einem erfindungsgemäßen Separator-Anodenverbund. Die Strombelastung während der Messung entsprach einem zweitstündigen Laden und Entladen.

Die in Fig. 9 dargestellte Ausführungsform des Separator-Anodenverbundes ist 585 µm dick, zeigt aber eine höhere spezifische Kapazität als die Zelle mit Polyolefin-Separator, was auf einen niedrigeren Innenwiderstand hinweist. Der erfindungsgemäße Separator-Anodenverbund besteht aus drei Einzellagen (1, 2, 15). Die erste Einzellage (1) ist ein Polyolefinseparator, die zweite Einzellage (2) ist ein PP-Netz und die dritte Lage ein PP-Netz, dessen Hohlraumvolumen vollständig mit Li-Metall gefüllt ist. Während die Zelle mit Polyolefin-Separator nach ca. 75 Zyklen schwankende Ladekapazitäten aufweist, was auf den Bereich der metastabilen Dendritenbildung hinweist, verhält sich die Zelle mit Abscheideseparator über 200 Zyklen stabil.

Bei diesem Separator-Anodenverbund ist bemerkenswert, dass trotz erheblich größerer Dicke der Innenwiderstand geringer ist als bei der Verwendung des Polyolefin-Separators. Sowohl die der geringere Innenwiderstand als auch die Verhinderung von Dendriten in den ersten 200 Zyklen wird auf den erfindungsgemäßen Abscheideprozess des Lithiums auf der Anodenseite zurückgeführt.

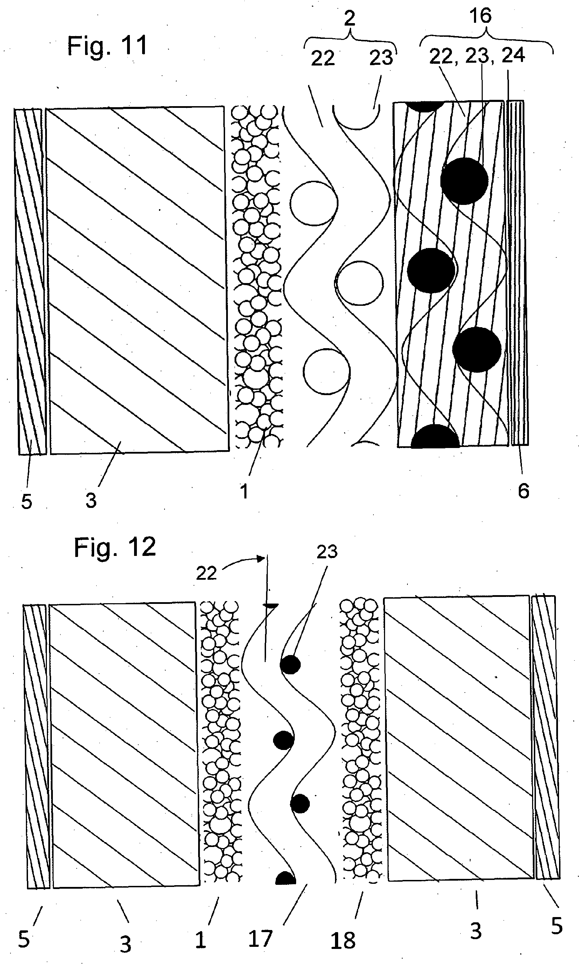

In Fig. 11 hat der schon in Fig. 9 offenbarte Separator-Anodenverbund in der Einzellage (16), die das Anodenmaterial enthält, elektrisch leitenden Masseanteile, die mit dem Anodenableiter (6) in elektrischem Kontakt stehen.

Beispielsweise werden elektrisch leitende Kettfäden mit elektrisch nicht leitenden Schussfäden kombiniert und Lithium eingepresst. Handelt es sich bei der elektrochemische Zelle beispielsweise um eine Lithium-Metall-Zelle mit einem Kathodenmaterial, dass mehr Lithium aufnehmen kann, als es im Ausgangszustand enthält, bleibt die elektrochemische Zelle mit einem vorgeschlagenen Separator-Anodenverbund auch dann noch funktionstüchtig, wenn das gesamte anodenseitige Lithium während des Entladens in der Kathode eingelagert wird, bevor es beim darauffolgenden Laden wieder zum Anodenableiter und in der Einzellage (16) des gezeigten Separator-Anodenverbundes abgeschieden wird, die der Kathode am weitesten entfernt ist. Dieser Vorteil ist ebenfalls bei allen weiter gezeigten Ausführungsbeispielen eines Separator-Anodenverbundes (Fig. 12-15) vorhanden.

Fig. 12-15 zeigen Separator-Anodenverbünde, bei der gänzlich auf einen Anodenableiter verzichtet werden kann, da seine Funktion durch elektrisch leitende Masseanteile einer Einzellage (17) des Separator-Anodenverbundes übernommen wird. Durch den Wegfall des Anodenableiters werden Kosten gespart und des Weiteren lässt sich die gravimetrische Energiedichte der elektrochemischen Zelle verringern. So werden beispielsweise in Lithium-Batterien gemäß dem Stand der Technik teure Kupferfolien als Ableiter verwendet.

Diese können zwar sehr dünn ausgeführt werden, besitzen aber im Vergleich zu einem PP-Netz mit elektrisch leitendem Masseanteil eine sehr viel höhere Dichte.

Ein weiteres Ausführungsbeispiel für einen Separator-Anodenverbund, der die volumetrische Energiedichte unter Beibehaltung der Kostenvorteile und der Verringerung der Dendritenbildung erheblich verbessert, ist in Fig. 12 gezeigt.

Es handelt sich um einen Separator-Anodenverbund aus einem mehrlagigen Separator aus drei Einzellagen (1, 17, 18). Der Separator-Anodenverbund befindet sich zwischen zwei Kathoden (3). Die zweite Lage (17) des mehrlagigen Separators besitzt dünne elektrisch leitende Kettfäden und dicke elektrisch nichtleitende Schussfäden. Die zweite Einzellage (17) integriert somit den Anodenableiter. Der elektrisch nicht leitende Anteil stellt die für eine Verringerung des Dendritenwachstums vorteilhaften Durchtrittsöffnungen zur Verfügung. Somit wird auch eine erheblich reduzierte Gesamtdicke des Separator-Anodenverbunds erreicht. Die Dickenreduzierung summiert sich bei einer gestapelten Anordnung mehrerer elektrochemischer Zellen.

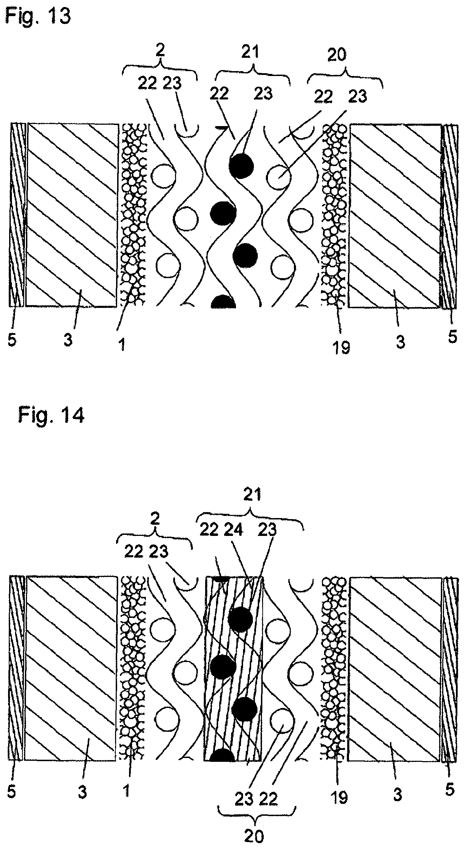

In der in Fig. 13 dargestellten Ausführung des Separatoren-Anoden-Verbundes wird aus zwei mehrlagigen Separatoren, die an mindestens einer leitenden Einzellagen (21) gegeneinander anliegen, gebildet. Vorzugsweise derart, dass von mindestens einer leitenden Einzellage (21) ausgehend die durchschnittliche Porengröße über alle Einzellagen (1, 2, bzw. 20, 19) zu der bzw. den Kathoden hin kleiner wird. Eine Separator-Anodenverbund ohne Anodenmaterial kann beispielsweise in Lithium-Metallzellen eingesetzt werden, die bei dem die Kathode initial Lithium enthält.

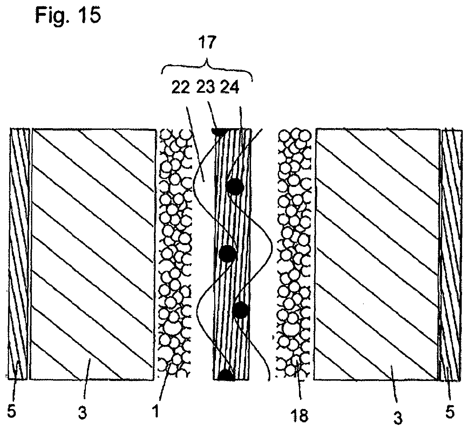

Die in der Fig. 14 und Fig. 15 dargestellte Weiterentwicklung wird durch eine leitende Einzellage (21) bzw. durch die Einzellage (17) in Fig. 15 eine Struktur zur Einlagerung von Anodenmaterial (24) ausgebildet.

Die in Fig. 12 bis Fig. 15 vorgestellten Separator-Anodenverbünde sowie der in Fig. 11 dargestellte mehrlagige Separator sind Initial d.h. bereits in der Fertigung eingebrachtem Anodenmaterial ausgeführt. Dadurch beinhaltet ein solcher Separator-Anodenverbund eine vollständige Anode und kann beidseitig an Kathoden angelagert werden.

Insbesondere bei besonders großen und flächigen elektrochemischen Zellen, bei denen die mechanische Stabilität und die Kurzschlusssicherheit einen besonders hohen Stellenwert einnimmt, sind mehrlagige Separatoren mit drei oder mehr Einzellagen vorteilhaft. So spielt beispielsweise für stationäre Anwendungen eine leicht verringerte volumetrische Energiedichte nur eine untergeordnete Rolle, wenn sich die elektrochemische Zellen mit mehrlagigem Separator kostengünstiger fertigen lassen als herkömmliche und eine hohe Sicherheit und Langlebigkeit besitzen.

Dem entsprechend ist eine elektrochemische Zelle mit einem erfindungsgemäßen mehrlagigen Separator auch Gegenstand der Erfindung.

In einer alternativen nicht dargestellten Ausgestaltung einer elektrochemischen Zelle mit mindestens einem mehrlagigen Separator erfährt die Anode während des Ladens und Entladens eine Volumenänderung zwischen 0 und 1000% besonders bevorzugt zwischen 50% und 500% bezogen auf einen entladenen Zustand erfährt.

Erfindungsgemäß wird auch ein nicht dargestellter Akkumulator umfassend mindestens eine elektrochemische Zelle mit mindestens einem mehrlagigen Separator zur Anwendung als Energiespeicher eingesetzt. Insbesondere werden diese in der Fahrzeugtechnik in Energiespeichersystemen von Elektro- und Hybridfahrzeugen verwendet, aber auch im stationären Bereich, etwa zur Pufferung von Lastspitzen oder bei Energiespeichern zur dezentralen Energieversorgung.

### Bezugszeichenliste

- 1: Erste Lage des mehrlagigen Separators
- 2: Zweite Lage des mehrlagigen Separators
- 3: Kathodenschicht
- 4: Anodenschicht
- 5: Kathodenableiter
- 6: Anodenableiter
- 7: Zweite Lage des mehrlagigen Separators mit Durchtrittsöffnungen
- 8: Zweite Lage des mehrlagigen Separators in Stegausführung
- 9: Zweite Lage des mehrlagigen Separators mit teilweise elektrisch leitenden Stegen
- 10: Erste Lage des mehrlagigen Separators mit einem elektrisch leitenden Masseanteil
- 11: Erste Lage des mehrlagigen Separators in Vliessausführung
- 12: Zweite Lage des mehrlagigen Separators in Gewebeausführung
- 13: Zweite Lage des mehrlagigen Separators in Gewebeausführung mit vereinzelt elektrisch leitenden Fäden
- 14: Zweite Lage des mehrlagigen Separators in Gewebeausführung mit elektrisch leitender Beschichtung
- 15: Dritte Lage eines Separator-Anodenverbundes in Gewebeausführung, die Anodenmaterial enthält
- 16: Dritte Lage eines Separator-Anodenverbundes in Gewebeausführung mit vereinzelt elektrisch leitenden Fäden, die Anodenmaterial enthält
- 17: Zweite Lage des mehrlagigen Separators in Gewebeausführung mit dünnen elektrisch leitfähigen Kettfäden und dicken elektrisch nichtleitenden Schussfäden
- 18: Zusätzliche Einzellage eines Separator-Anodenverbundes
- 19: Erste Lage des zweiten mehrlagigen Separators,
- 20: Zweite Lage des zweiten mehrlagigen Separators
- 21: Dritte Lage des zweiten mehrlagigen Separators in Gewebeausführung mit elektrisch leitfähigen Kettfäden und elektrisch nichtleitenden Schussfäden
- 22: Schussfaden
- 23: Kettfaden
- 24: Anodenmaterial
- 25: Spezifische Kapazität der elektrochemischen Zelle
- 26: Anzahl der Lade- Entladezyklen
- 27: Spez. Ladekapazität einer elektrochemischen Zelle mit einem Glasfaser-Separator ●
- 28: Spez. Entladekapazität einer elektrochemischen Zelle mit einem Glasfaser-Separator ○
- 29: Spez. Ladekapazität einer elektrochemischen Zelle mit einem mehrlagigen Separator ◄
- 30: Spez. Entladekapazität einer elektrochemischen Zelle mit einem mehrlagigen Separator ◁
- 31: Spez. Ladekapazität einer elektrochemischen Zelle mit einem Separator-Anodenverbund ▼
- 32: Spez. Entladekapazität einer elektrochemischen Zelle mit einem Separator-Anodenverbund ∇
- 33: Spez. Ladekapazität einer elektrochemischen Zelle mit einem Polyolefin-Separator ■
- 34: Spez. Entladekapazität einer elektrochemischen Zelle mit einem Polyolefin-Separator □

## Patentansprüche

1. Mehrlagiger Separator für eine elektrochemische Zelle mit mindestens einer Kathode **(3)** und mindestens einer Anode **(4)** umfassend
a) mindestens zwei aufeinander liegende Einzellagen **(1, 2)**
b) mindestens eine Einzellage **(1, 2)** mit einer offenporigen Struktur mit einer Porosität zwischen 20 % und 97 % zur Aufnahme eines Elektrolyts durchzogen ist,
c) die durchschnittliche Porengröße über alle Einzellagen **(1, 2)** zur Kathode **(3)** hin kleiner wird,
d) die Einzellage **(2),** die der Kathode **(3)** am weitesten entfernt ist, in flächennormaler Richtung Durchtrittsöffnungen und ein Volumen zur Aufnahme von Anodenmaterial **(24)** umfasst.
e) mindestens eine Einzellage **(13)**
- aus einem elektrisch leitenden organischen und einem elektrisch nichtleitenden anorganischen Material und/oder
- aus einem elektrisch nichtleitenden organischen und einem elektrisch leitenden anorganischen Material und/oder
- aus einem elektrisch nichtleitenden anorganischen und einem elektrisch leitenden anorganischen Material und/oder
- aus einem elektrisch nichtleitenden organischen und einem elektrisch leitenden organischen Material besteht.
**dadurch gekennzeichnet, dass**
f) mindestens eine Einzellage des Separators (1, 2) als Gewebe mit Kett- und Schußfäden **(22, 23)** und /oder Filz und /oder Vlies **(11)** und /oder gefriergegossene Plattenstruktur, und /oder offenzellige Schaumstruktur und /oder als eine perforierte Folie ausgebildet ist.

2. Mehrlagiger Separator nach Anspruch 1, wobei das Verhältnis der durchschnittlichen Porengröße zwischen der Einzellage **(1),** die der Kathode **(3)** am nächsten liegt und der Einzellage **(2),** die der Kathode **(3)** am weitesten entfernt liegt, zwischen ½ und 1/1000000 ist.

3. Mehrlagiger Separator nach einem der vorangehenden Ansprüche, wobei die Einzellage **(13)** des Separators, die der Kathode **(3)** am weitesten entfernt ist, einen elektrisch nichtleitenden organischen Material-Massenanteil in einem Bereich zwischen 40% und

4. Mehrlagiger Separator nach Anspruch 1, wobei mindestens ein Teil der Kett- und/oder Schußfäden **(22, 23)** elektrisch leitend sind.

5. Mehrlagiger Separator nach einem der vorangehenden Ansprüche, wobei mindestens eine Einzellage aus einer Kombination aus elektrisch leitendem und/oder aus elektrisch nicht leitendem Material besteht, wobei
a) der elektrisch leitende Anteil als Beschichtung des elektrisch nichtleitenden Materials und/oder
b) der elektrisch nichtleitende Anteil als Beschichtung des elektrisch leitenden Materials und/oder
c) ein elektrisch nichtleitender Anteil als Beschichtung des Materials, das aus elektrisch leitenden und nichtleitenden Anteilen besteht und/oder
d) ein elektrisch leitender Anteil als Beschichtung des Materials, das aus elektrisch leitenden und nichtleitenden Anteilen besteht,
vorliegt.

6. Mehrlagiger Separator nach Anspruch 4 oder 5, wobei mindestens eine Einzellage **(1,14)** einen elektrisch leitenden Anteil und / oder ein elektrisch nichtleitenden Anteil als eine Beschichtung eines Gewebes aus leitfähigen und nichtleitfähigen Fäden aufweist.

7. Mehrlagiger Separator nach einem der vorangehenden Ansprüche, wobei eine Einzellage **(1, 2)** zwischen 5 µm und 800 µm dick ist, besonders bevorzugt zwischen 10 µm und 300 µm.

8. Separator-Anodenverbund; umfassend mindestens einen mehrlagigen Separator nach einem der vorangehenden Ansprüche, wobei die Poren der Einzellage **(15),** die der Kathode **(3)** am weitesten entfernt ist, das Anodenmaterial **(24)** enthält.

9. Separator-Anodenverbund, umfassend mindestens einen mehrlagigen Separator nach einem der Ansprüche 1 bis 7, wobei durch mindestens eine zusätzliche Einzellage **(18)** der Separator-Anodenverbund entsteht, wobei diese Einzellage an einer Einzellage **(17)** des mehrlagigen Separators, die aus einem elektrisch leitenden und einem elektrisch nichtleitenden Material hergestellt ist, anliegt und ausgehend von der mittleren Einzellage **(17)** des Separator-Anodenverbundes die durchschnittliche Porengröße über alle Einzellagen **(1,18)** zu mindestens einer Kathode **(3)** hin kleiner wird.

10. Separator-Anodenverbund, umfassend mindestens zwei mehrlagige Separatoren nach einem der Ansprüche 1 bis 7, wobei diese an einer Einzellage **(21),** die aus einem elektrisch leitenden und einem elektrisch nichtleitenden Material hergestellt ist, gegeneinander anliegen und ausgehend von dieser Einzellage **(21)** die durchschnittliche Porengröße über alle Einzellagen zu mindestens einer Kathode **(3)** hin kleiner wird.

11. Separator-Anodenverbund, umfassend mindestens einen Separator-Anodenverbund nach Anspruch 8 und wenigstens eine zusätzliche Einzellage **(18),**
a) wobei die zusätzliche Einzellage **(18)** an einer Einzellage **(17),** die aus einem elektrisch leitenden und einem elektrisch nichtleitenden Material hergestellt ist, anliegt,
b) wobei ausgehend von der Einzellage **(17),** die aus einem elektrisch leitenden und einem elektrisch nichtleitenden Material hergestellt ist, die durchschnittliche Porengröße über alle Einzellagen in Richtung mindestens einer Kathode **(3)** hin kleiner wird.

12. Separator-Anodenverbund, umfassend mindestens einen Separator-Anodenverbund nach Anspruch 8 , wobei wenigstens ein zusätzlicher mehrlagigen Separator **(19, 20)** an der Einzellage **(21),** die aus einem elektrisch leitenden und einem elektrisch nichtleitenden Material hergestellt ist, anliegt und die durchschnittliche Porengröße über alle Einzellagen in Richtung mindestens einer Kathode **(3)** hin kleiner wird.

13. Verwendung eines mehrlagigen Separators nach einem der Ansprüche 1 bis 7 für eine elektrochemische Zelle, wobei mindestens eine Anode **(3)** während des Ladens und Entladens eine Volumenänderung zwischen 0 bis 1000 %, besonders bevorzugt zwischen 50 % und 500 %, bezogen auf einen entladenen Zustand der elektrochemischen Zelle erfährt.

14. Verwendung einer elektrochemischen Zelle nach Anspruch 13 für einen Akkumulator.

## Claims

1. Multi-layer separator for an electrochemical cell with at least one cathode (3) and at least one anode (4), comprising
a) at least two individual layers (1, 2) lying one on top of the other,
b) at least one individual layer (1, 2) with an open-pore structure with a porosity of between 20% and 97% for receiving an electrolyte, wherein
c) the average pore size decreases over all individual layers (1, 2) towards the cathode (3),
d) the individual layer (2) which is furthest removed from the cathode (3) comprises, in the surface normal direction, passage openings and a volume for receiving anode material (24),
e) at least one individual layer (13) consists of
- an electrically conductive organic material and an electrically non-conductive inorganic material, and/or
- an electrically non-conductive organic material and an electrically conductive inorganic material, and/or
- an electrically non-conductive inorganic material and an electrically conductive inorganic material, and/or
- an electrically non-conductive organic material and an electrically conductive organic material,
**characterised in that**
f) at least one individual layer of the separator (1, 2) is formed as a fabric with warp and weft threads (22, 23) and/or felt and/or non-woven fleece (11) and/or a freeze-cast plate structure and/or an open-cell foam structure and/or as a perforated film.

2. Multi-layer separator according to claim 1, wherein the ratio of the average pore size between the individual layer (1) which lies nearest to the cathode (3) and the individual layer (2) which lies furthest removed from the cathode (3) is between ½ and 1/1000000.

3. Multi-layer separator according to any one of the preceding claims, wherein the individual layer (13) of the separator which is furthest removed from the cathode (3) comprises an electrically non-conductive organic material mass portion in a range between 40% and 85%.

4. Multi-layer separator according to claim 1, wherein at least part of the warp and/or weft threads (22, 23) are electrically conductive.

5. Multi-layer separator according to any one of the preceding claims, wherein at least one individual layer consists of a combination of electrically conductive and/or electrically non-conductive material, wherein
a) the electrically conductive portion is present as a coating of the electrically non-conductive material and/or
b) the electrically non-conductive portion is present as a coating of the electrically conductive material and/or
c) an electrically non-conductive portion is present as a coating of the material which consists of electrically conductive and non-conductive portions, and/or
d) an electrically conductive portion is present as a coating of the material which consists of electrically conductive and non-conductive portions.

6. Multi-layer separator according to claim 4 or 5, wherein at least one individual layer (1, 14) comprises an electrically conductive portion and/or an electrically non-conductive portion as a coating of a fabric formed of conductive and non-conductive threads.

7. Multi-layer separator according to any one of the preceding claims, wherein one individual layer (1, 2) is between 5 µm and 800 µm thick, for particular preference between 10 µm and 300 µm.

8. Separator-anode combination comprising at least one multi-layer separator according to any one of the preceding claims, wherein the pores of the individual layer (15) which is furthest removed from the cathode (3) contains the anode material (24).

9. Separator-anode combination comprising at least one multi-layer separator according to any one of claims 1 to 7, wherein the separator-anode combination comes into being by at least one additional individual layer (18), wherein this individual layer is in contact at an individual layer (17) of the multi-layer separator, that layer being made of an electrically conductive and an electrically non-conductive material, and, going out from the middle individual layer (17) of the separator-anode combination, the average pore size decreases over all individual layers (1, 18) towards at least one cathode (3).

10. Separator-anode combination comprising at least two multi-layer separators according to any one of claims 1 to 7, wherein these are in contact against one another at an individual layer (21), said layer being made of an electrically conductive and an electrically non-conductive material, and, going out from this individual layer (21), the average pore size decreases over all individual layers towards at least one cathode (3).

11. Separator-anode combination comprising at least one separator-anode combination according to claim 8, and at least one additional individual layer (18),
a) wherein the additional individual layer (18) is in contact with an individual layer (17) which is made of an electrically conductive and an electrically non-conductive material,
b) wherein, going out from the individual layer (17) which is made of an electrically conductive and an electrically non-conductive material, the average pore size decreases over all individual layers towards at least one cathode (3).

12. Separator-anode combination comprising at least one separator-anode combination according to claim 8, wherein at least one additional multi-layer separator (19, 20) is in contact with the individual layer (21) which is made of an electrically conductive and an electrically non-conductive material, and the average pore size decreases over all individual layers towards at least one cathode (3).

13. Use of a multi-layer separator according to any one of claims 1 to 7 for an electrochemical cell, wherein at least one anode (3) undergoes, between charging and discharging, a volume change of between 0 to 1000%, for particular preference between 50% and 500%, related to a discharged state of the electrochemical cell.

14. Use of an electrochemical cell according to claim 13 for an accumulator.

## Revendications

1. Séparateur multicouches destiné à une cellule électrochimique ayant au moins une cathode (3) et au moins une anode (4) comprenant :
a) au moins deux couches individuelles (1, 2) appliquées l'une sur l'autre,
b) au moins une couche individuelle (1, 2) étant équipée d'une structure à pores ouverts ayant une porosité comprise entre 20% et 97% pour permettre la réception d'un électrolyte,
c) la dimension moyenne des pores de toutes les couches individuelles (1, 2) diminue vers la cathode (3),
d) la couches individuelle (2) qui est la plus éloignée de la cathode (3) a, dans la direction normale, des ouvertures de passage et un volume permettant la réception du matériau d'anode (24),
e) au moins une couche individuelle (13) est constituée :
- d'un matériau organique électriquement conducteur et d'un matériau non organique et non électriquement conducteur,
- d'un matériau organique non électriquement conducteur et d'un matériau non organique électriquement conducteur et/ou
- d'un matériau non organique non électriquement conducteur et d'un matériau non organique électriquement conducteur et/ou
- d'un matériau organique non électriquement conducteur et d'un matériau organique électriquement conducteur,
**caractérisé en ce que**
f) au moins une couche individuelle du séparateur (1, 2) est réalisée sous la forme d'un tissu ayant des fils de chaine et des fils de trame (22, 23), et/ou d'un feutre et/ou d'un non-tissé (11) et/ou d'une structure de plaque coulée par congélation et/ ou d'une structure de mousse à cellules ouvertes et/ou d'un film perforé.

2. Séparateur multicouches conforme à la revendication 1,
dans lequel le rapport de dimension moyenne des pores entre la couche individuelle (1) qui est la plus proche de la cathode (3) et la couche individuelle (2) qui est la plus éloignée de la cathode (3) est située entre ½ et 1/1000000.

3. Séparateur multicouches conforme à l'une des revendications précédentes,
dans lequel la couche individuelle (13) du séparateur qui est la plus éloignée de la cathode (3) renferme une proportion massique de matériau organique électriquement non conducteur située dans la plage située entre 40% et 85%.

4. Séparateur multicouches conforme à la revendication 1,
dans lequel au moins une partie des fils de chaîne et/ou des fils de trame (22, 23) est électriquement conductrice.

5. Séparateur multicouches conforme à l'une des revendications précédentes,
dans lequel au moins une couche individuelle est constituée d'une combinaison d'un matériau électriquement conducteur et/ou d'un matériau non électriquement conducteur,
a) la fraction électriquement conductrice se présentant sous la forme d'un revêtement du matériau non électriquement conducteur et/ou
b) la fraction non électriquement conductrice se présentant sous la forme d'un revêtement du matériau électriquement conducteur, et/ou
c) une fraction non électriquement conductrice se présentant sous la forme d'un revêtement du matériau qui est constitué de fractions électriquement conductrices et de fractions non électriquement conductrice, et/ou
d) une fraction électriquement conductrice se présentant sous la forme d'un revêtement du matériau qui est constitué de fractions électriquement conductrices et de fractions non électriquement conductrices.

6. Séparateur multicouches conforme à la revendication 4 ou 5,
dans lequel au moins une couche individuelle (1, 14) comporte une fraction électriquement conductrice et/ou une fraction non électriquement conductrice sous la forme d'un revêtement d'un tissu de fibres conductrices et non conductrices.

7. Séparateur multicouches conforme à l'une des revendications précédentes,
dans lequel une couche individuelle (1, 2) a une épaisseur comprise entre 5 µm et 800 µm et de façon plus préférentielle entre 10 µm et 300 µm.

8. Elément composite séparateur anodes comprenant au moins un séparateur multicouches conforme à l'une des revendications précédentes les pores de la couche individuelle (15) la plus éloignée de la cathode (3) renfermant le matériau d'anode (24).

9. Elément composite séparateur anodes comprenant au moins un séparateur multicouches conforme à l'une des revendications 1 à 7 formé par au moins une couche individuelle supplémentaire (18), cette couche individuelle étant appliquée sur une couche individuelle (17) du séparateur multicouches qui est réalisée à partir d'un matériau électriquement conducteur et d'un matériau non électriquement conducteur, et à partir de la couche individuelle médiane (17) de l'élément composite séparateur anodes, la dimension moyenne de pores de toutes les couches individuelles (1, 18) diminue vers au moins une cathode (3).

10. Elément composite séparateur anodes comprenant au moins deux séparateurs multicouches conforme à l'une des revendications 1 à 7, ces séparateurs s'appliquant mutuellement sur une couche individuelle (21) qui est réalisée en un matériau électriquement conducteur et en un matériau non électriquement conducteur, et à partir de cette couche individuelle (21) la dimension moyenne des pores de toutes les couches individuelles diminue vers au moins une cathode (3).

11. Elément composite séparateur anodes comprenant au moins un élément composite séparateur anodes conforme à la revendication 8 et au moins une couche individuelle supplémentaire (18), dans lequel :
a) la couche individuelle supplémentaire (18) s'applique sur une couche individuelle (17) qui est réalisée en un matériau électriquement conducteur et en un matériau non électriquement conducteur,
b) à partir de la couche individuelle (17) qui est réalisée en un matériau électriquement conducteur et en un matériau non électriquement conducteur, la dimension moyenne des pores de toutes les couches individuelles diminue en direction d'au moins une cathode (3).

12. Elément composite séparateur anodes comprenant au moins un élément composite séparateur anodes conforme à la revendication 8,
dans lequel au moins un séparateur multicouches supplémentaire (19, 20) s'applique sur la couche individuelle (21) qui est réalisée en un matériau électriquement conducteur et en un matériau non électriquement conducteur, et la dimension moyenne des pores de toutes les couches individuelles diminue en direction d'au moins une cathode (3).

13. Utilisation d'un séparateur multicouches conforme à l'une des revendications 1 à 7, dans une cellule électrochimique, au moins une anode (3) subissant, pendant la charge et la décharge, une variation de volume comprise entre 0 et 1000%, et de façon particulièrement préférentielle, entre 50% et 500% par rapport à l'état déchargé de la cellule électrochimique.

14. Utilisation d'une cellule électrochimique conforme à la revendication 13, dans un accumulateur.
